# EUROPEAN PATENT APPLICATION

(11) **EP 2 336 822 A1**
(43) Date of publication of application: **22.06.2011**
(21) Application number: 10167091.7
(22) Date of filing: 23.06.2010
(51) Int. Cl.: G03B 21/58

(54) **Retractable Projection Screen and Device for Ensuring its Flatness**

(30) Priority: 24.06.2009 FR 0903082
(71) Applicant: Anagram-Acoustics s.a.r.l., 93360 Neuilly-Plaisance (FR)
(72) Inventor: Congard, Patrice Bernard François, 75020, Paris (FR); Charrier, Jean-Pierre, 92310, Sèvres (FR)
(74) Representative: Manaton, Ross Timothy

(57) **Abstract**

The invention relates to a projection screen consisting of a rollable fabric (22) comprising a projection surface (28), means for rolling the said fabric, ballasting means (24) helping with the unrolling of the said fabric and providing it by gravity with vertical tensioning, and means for guiding (25, 26) and for laterally tensioning (29) the said fabric that are secured to fixed lateral walls that are generally face to face and at right angles to the fabric.

## Description

The present invention relates to projection screens and more particularly video projection screens for domestic use.

The subject of the present invention is a device for retracting and tensioning a projection screen.

Various devices for retracting projection screens are known, the object of which is to cause the screen to disappear from view when it is not used for a projection. Such devices usually consist in the rolling of the screen around a roller, which may or may not be motorized. When the screen is in the operating position, it is extended on a substantially vertical plane. After its use, it is rolled around a fixed roller so as to clear the space occupied by the screen when it is operating.

Such devices are particularly suitable for the use of projection screens in premises that are not exclusively reserved for video projection, such as multiple-use rooms in dwellings, or else multipurpose conference rooms.

A conventional drawback of the screens that are retracted by rolling is there lack of flatness when they are unrolled, in the operating position. Usually ballasted by a bar called a ballast bar which is generally horizontal and secured to the bottom edge of the screen, they sustain a vertical tension which allows them to extend in a vertical plane. This vertical tension is due to the force of gravity which is exerted on the bottom edge of the screen because of the weight of the ballast bar.

This same force allows the screen to extend when a user unrolls the roller around which the screen is rolled when it is not in operation.

However, this force is in a vertical direction only. Any lack of uniformity in the material forming the screen and any other deformation due to its wear or any other cause gives rise to flatness defects appearing like waves on the surface of the screen. Similarly, the lateral edges of the screen tend to bend instead of remaining straight.

To remedy these problems, devices for tensioning the screen have been used. Generally, they consist of fastening lugs protruding laterally from the surface of the screen, symmetrically on either side of the latter. These fastening lugs have different lengths so that their ends are placed in a arc of a vertical circle travelling away from the surface of the screen at the top and at its base and moving closer thereto at the middle. On each side, a halyard connects the ends of these fastening lugs together, thus describing an arc of a circle along the ends of the latter. Each halyard is fastened at the top to the said roller around which the screen rolls, and at the bottom to the said ballast bar.

Therefore, the ballast bar applies by gravity a vertical force on the halyard which, not being parallel to the edge of the screen, exerts a resultant horizontal force which pulls the fastening lugs towards the outside of the screen. This applies a lateral tension which, combined with the vertical tension force applied directly by the ballast bar, makes it possible to give the screen the necessary flatness.

Such devices are however awkward to apply, particularly by reason of the adjustments that they require to operate correctly. Moreover, the arrangement in an arc of a circle of the halyards situated on either side of the screen is often considered unattractive. Finally, the fastening lugs and the halyard situated on either side involve a total width of the device that is substantially greater than that which would normally be necessary for the screen alone.

A first object of the present invention is to propose a retractable projection screen that is totally flat when the screen is in the operating position.

A second object of the present invention is to propose a device for retracting the said screen that is particularly well hidden when the said screen is retracted.

A third object of the present invention is to propose a retractable screen that is simple to use and is not very costly.

In greater detail:
A projection screen comprising: a rollable fabric forming a projection surface;
means for rolling the said fabric; ballasting means to assist with the unrolling of the said fabric and to provide it by gravity with vertical tensioning: guidance means for guiding and for laterally tensioning the said fabric, said guidance means being secured to fixed lateral walls being generally face to face and at right angles to the fabric; **characterized in that**, in use, only a portion of the fabric rolls and unrolls, which portion remains hidden from view, and in that the projection surface may be moved between a projection position, in which it is deployed in front of a wall, and a retracted position, in which it is hidden from view behind a wall.

Preferably, a screen according to the present invention comprises a first portion called the rolling portion which rolls and unrolls around rolling means so as to determine the position of a second portion comprising the said projection surface which does not roll.

Preferably, a screen according to the present invention comprises a wall called a dissimulation wall that is substantially at right angles to the said lateral walls to which the said guidance means are secured, the said portion of the screen forming a projection surface being behind the said dissimulation wall when the rolling portion is rolled, and in front of the said dissimulation wall when the rolling portion is unrolled.

Preferably, the said means for guiding and for laterally tensioning the fabric consist of two pluralities of fastening elements each capable of moving along a rail, the said rails being placed symmetrically in two generally parallel planes secured to the said lateral walls being face to face, and at right angles to the plane on which the fabric unrolls.

Preferably, the said rails comprise at least a first portion extending vertically and a second portion extending behind the said dissimulation wall, the said two portions being connected by a connection fillet.

In a first embodiment of the invention, the dissimulation wall is vertical and extends parallel to a partition in front of and close to the latter.

Preferably, in this first embodiment of the invention, the dissimulation wall supports at least one sound source in front of which the projection surface is placed when the rolling portion of the fabric is unrolled and the projection surface is permeable to sound waves.

In a second embodiment of the invention, the dissimulation wall is substantially horizontal and extends beneath a ceiling.

The objects, features and advantages of the present invention will emerge from the description given below of two embodiments of the present invention given as illustrative and non-limiting examples, with respect to the appended drawings in which:
Fig. 1 is a view in front elevation of a retractable screen according to the prior art.
Fig. 2 is a partial view in perspective of a screen according to the invention in the unrolled position.
Fig. 3 is a view in cross section of a screen according to the invention in the unrolled position.
Fig. 4 is a plan view of a fabric unrolled flat of a screen according to the invention.
Fig. 5 is a view in section of a detail of guidance means according to one embodiment of the invention.
Fig. 6 is a view in section of a second embodiment of the invention. and
Fig. 7 is a partial view in perspective of a variant embodiment of a screen according to the invention.

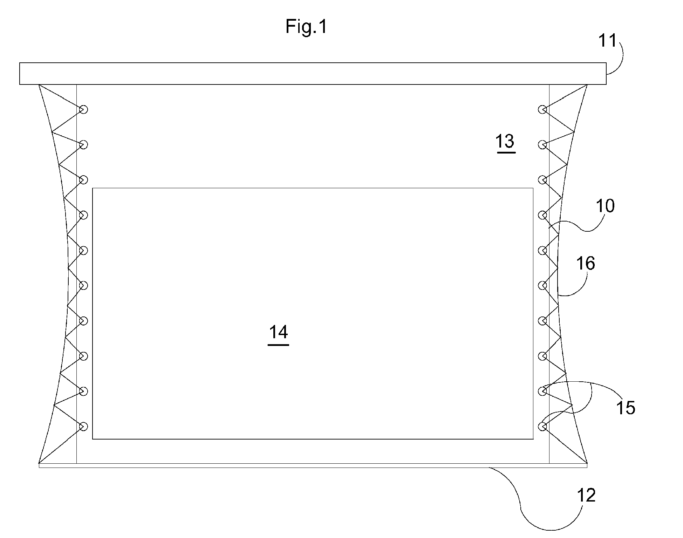

In greater detail, with reference to Fig. 1, a rollable projection screen according to the prior art comprises a projection fabric (10) extending in a vertical plane in the unrolled position. The fabric (10) is attached to its top portion to a rolling tube (11), preferably retaining, in the unrolled position, at least one undeployed revolution.

The fabric (10) is furnished with a ballast bar (12) at its bottom portion, which forces it to unroll and to be stretched vertically by gravity.

The fabric (10) comprises two portions. A first portion (13) which is black in colour and constitutes a support and a frame for a second portion (14), called the projection surface, which is white or light grey in colour. Usually, the fabric (10) is made of a uniform material, the portions (13) and (14) being delimited by the black paint of the portion (13).

In many embodiments, the projection surface (14) is totally surrounded by black edges, thus forming a framed enclave in the portion (13).

Each lateral edge of the fabric (10) is furnished with a plurality of eyelets (15) that are aligned vertically and close to the edges.

A first halyard (16) is provided on each side of the fabric, extending substantially in the same plane and in a generally vertical direction. The halyard (16) is rolled up at one end around the rolling tube (11), and is attached at its other end to the ballast bar (12), at an appropriate distance outside the fabric (10).

A second halyard (17) is also attached to the ballast bar (12), substantially at the same attachment point as the first halyard (16) and to the rolling tube (11) around which it is partially rolled. This second halyard (17) is placed in zigzags so as to connect each of the eyelets (15), that it passes through, to the first halyard (16).

Each side of the fabric comprises a first halyard (16) and a second halyard (17) placed symmetrically relative to the vertical median of the fabric.

When the halyard (17) is stretched with an appropriate force, either prior to their attachment, or by appropriate tensioning means (not shown), the halyard (16) curves because of the lateral traction exerted on it by the halyard (17) while the tension exerted on it by the ballast bar attempts to make it rectilinear.

Therefore, the halyard (16) in its turn exerts on the eyelets (15), via the halyard (17), a force tending to pull them substantially in a lateral direction and toward the outside of the fabric (10). Therefore, the eyelets (15) and the halyards (16) and (17) tension the fabric (10).

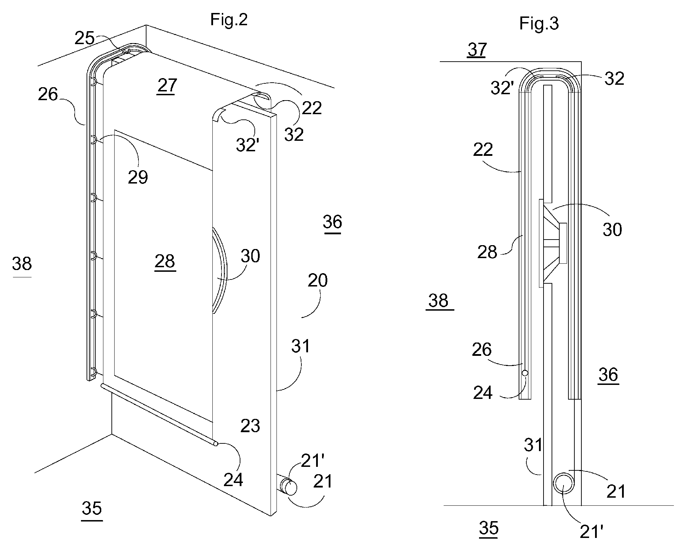

According to a first embodiment of the invention, with reference to Figs. 2, 3 and 4, a screen (20) according to the invention is placed generally parallel to a vertical wall (36) and extends between two walls (38) and (38') (the latter not being shown) facing one another, substantially parallel, vertical and at right angles to the wall (36). Two substantially horizontal walls (35) and (37) extend in a direction at right angles to the walls (36), (38) and (38') which they limit respectively at the bottom and at the top.

The walls (35), (36), (37), (38), and (38') conventionally constitute one end of a dwelling room, but may also be, for example, a portion of an item of furniture capable of accommodating the said screen.

The screen (20) comprises a rolling tube (21) extending in a substantially horizontal direction, parallel to the walls (35) and (36), and is attached by its ends to the walls (38) and (38'). The screen (20) also comprises a flexible rectangular fabric (22), preferably formed of a cloth, but also being able to be a sheet of a plastic material, or of any other suitable material.

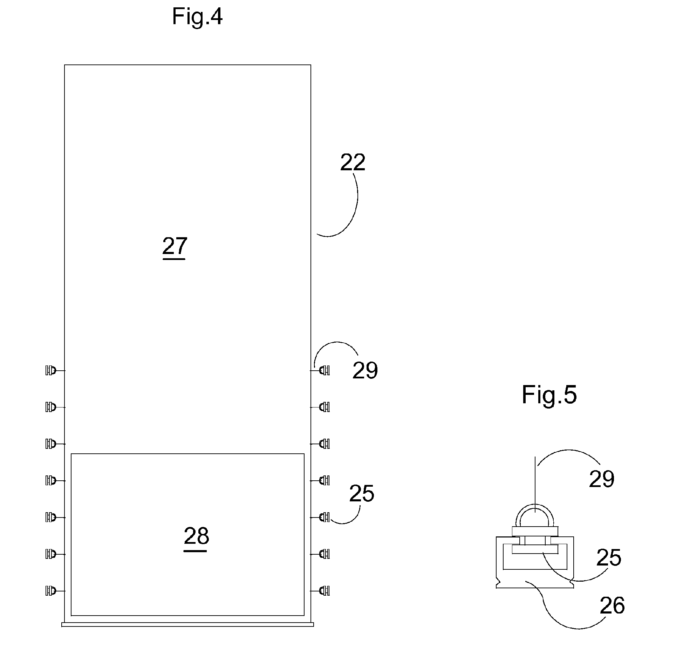

The fabric (22) (Fig. 4) comprises a portion called the support portion (27) and a smaller, rectangular projection surface (28) the sides of which are parallel to the fabric (22). The projection surface (28) is white or light grey in colour, the support portion (27) being black and framing the projection surface (28) so that three edges of the projection surface (28) are framed by a black strip of substantially constant width. The fourth edge of the projection surface (28) is extended by a preferably black surface of the support portion (27) which constitutes the majority of the surface area thereof. The fabric (22) comprises an edge called the rolling edge which rolls up around the rolling tube (21) with, in the unrolled position, at least one undeployed revolution, and an edge called the bottom edge opposite to the rolling edge which comprises a ballast bar (24) consisting, for example, of a metal bar of circular section inserted into a sewn or heat-sealed sheath provided in the fabric (22).

The sides of the fabric (22) at right angles to the bottom and rolling edges form the lateral edges that are furnished with a plurality of elastic means (29) placed at regular intervals over a portion of their height that is less than or equal to half of their height and greater than or equal to the height of the projection surface (28). The said elastic means (29) connect a portion of the lateral edges of the fabric (22) to sliders (25) capable of sliding in a guide rail (26) as shown in Fig. 5.

Two guide rails (26) and (26') (the rail 26' not being shown in the drawings), extend over the walls (38) and (38') (the wall 38' not being shown in the drawings), face to face, in a form of an inverted U and thus determine a travel path for the sliders (25).

A dividing wall (31) parallel to the wall (36) extends from the wall (35) and between the walls (38) and (38') and has a free upper edge allowing a passageway beneath the wall (37). This dividing wall (31) is placed between the vertical legs of the inverted U of the guide rails (26) and (26'), the central portion of which passes through the said passageway between its upper edge and the wall (37).

The dividing wall (31) is pierced with at least one opening in which there is at least one source of sound reproduction (30), represented in the form of a loudspeaker in the appended drawings. Advantageously, a plurality of speaker systems will be provided, preferably three speaker systems placed substantially at the same height, as the sound source (30). Such speaker systems may, as a variant, be attached to the dividing wall (31) or fitted into recesses arranged in the said dividing wall.

The central portion of the inverted U formed by each of the guide rails (26) and (26') is designed to be wider than the depth of the sound source (30) and of the dividing wall (31) together.

Two deflection guides (32) and (32') consisting of a quarter of cylinders are placed close to the upper edge of the dividing wall (31) and extend parallel to the said dividing wall between the inner radii of the curved portions of the rails (26) and (26'). The radius of the deflection guides (32) and (32') is substantially equal to the inner radius of the curved portions of the guide rails (26) and (26').

The projection surface (28) of the fabric (22) consists of an acoustically transparent material. Preferably, the whole of the fabric (22) consists of an acoustically transparent material that is substantially white in colour, the fabric being partially painted black over the whole of the support portion (27) and a reserved area remaining white determines the projection surface (28). When the fabric (22) is in the unrolled position, as shown in Figs. 2 and 3, the projection surface (28) extends in its totality in front of the dividing wall (31) and in front of the sound source (30). Since the fabric (22) is permeable to sound waves, the sounds emitted by the sound source (30) seems to come from the screen onto which a corresponding image is projected, which is a desired effect. The fabric (22) is then tensioned vertically by the force of gravity exerted by the ballast bar (24), the force holding it in the opposite direction being that of retention by the rolling tube (21) deflected by the two deflection guides (32) and (32').

Horizontally, the fabric (22) is tensioned by elastic means (29) attached to the sliders (25) capable of sliding in the guide rails (26) and (26').

When the rolling tube (21) is rotated by appropriate and known driving means, conventionally an axial motor (21'), the rolling tube (21) rolls up the fabric (22). The sliders (25) slide in the rails (26) and (26'), while the fabric (22) rises vertically along the wall (31), and passes over the latter in the direction guided both by the rails (26) and (26') and by the deflection guides (32') and (32), in order subsequently to extend partially between the dividing wall (31) and the wall (36).

The axial motor (21') is furnished with a stopping device, called an adjustable end-of-travel device, operating in both directions of rotation. This device is adjusted so that, when the fabric is rolled up, the ballast bar (24) is substantially in line with the bottom edge of the front deflection guide (32'), and, when the fabric is unrolled, the whole of the projection surface (28) is beneath the lower edge of the deflection guide (32'), in practice in a position that is suitable for receiving a video or other projection.

Therefore, the ballast bar (24) is always in front of the dividing wall (31).

When the rolling tube (21) turns in the reverse direction, allowing the fabric (22) to be unrolled, the ballast bar (24) is beyond the two deflection guides (32') and (32), pulls the fabric (22) down and therefore helps its unrolling while keeping it vertically in tension. The adjustable end-of-travel device of the axial motor (21') stops the unrolling of the tube (21) when the projection surface (28) is in the desired position.

During the movement of the assembly consisting of the fabric (22) and the ballast bar (24), the elastic means (29) are driven in this movement and the sliders (25) slide in the rails (26) and (26'). The elastic means (29) therefore provide the fabric (22) with a lateral tension during these rolling-up and unrolling movements and in its unrolled position.

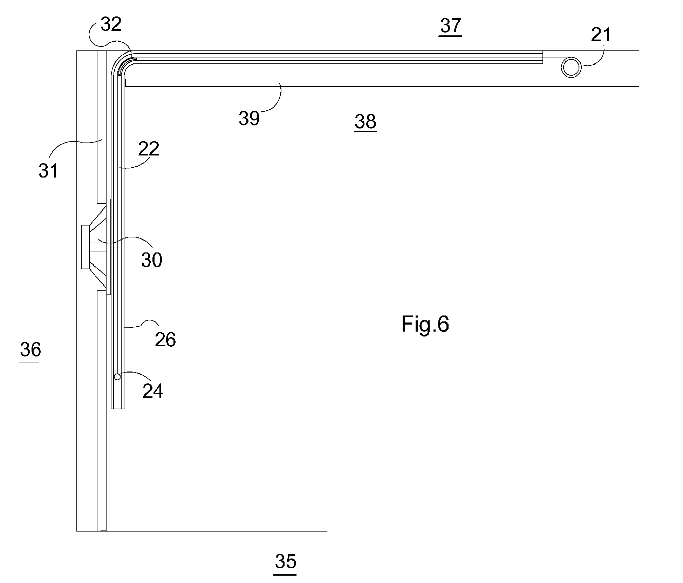

Decorative means can be provided so as to mask the ballast bar (24), when it is in the top position (fabric rolled up), and the portion of the fabric (22) that remains in front of the dividing wall (31). Fig. 6 represents a second embodiment of the invention in which the rolling tube (21) is attached to the ceiling (37). The fabric (22) extends in a first plane substantially parallel to the ceiling as far as a deflection guide (32), then vertically by gravity. A ballast bar (24) provides the force of gravity necessary to tension the fabric (22) vertically. The fabric (22) is similar to that described in the first embodiment of the invention. A sound source (30) can, as shown in the drawing, be fitted into a dividing wall (31) or else simply attached to the partition (36). Elastic means (not shown) connect the edges of the fabric to sliders contained in two guide rails (26) and (26') extending for a first portion in a vertical direction and for a second portion in a substantially horizontal direction, these two portions being connected by a fillet with a radius that is substantially equal to that of the deflection guide (32). In a manner similar to the first embodiment of the invention, the guide rails (26) and (26') face one another and are attached to walls.

A false ceiling (39), extending in a substantially horizontal plane beneath the ceiling (37) masks a portion of the fabric (22), guide rails (26) and (26'), the rolling tube (21) and the deflection guide (32). The false ceiling (39) does not join the dividing wall (31) so as to arrange a slot through which the fabric (22), the elastic means and the sliders contained in the rails (26) and (26') can travel.

The slot separating one edge of the false ceiling (39) from the dividing wall (31) can be closed off by mechanical means such as a pivoting hatch or any type of decoration.

When the fabric (22) is unrolled, it extends substantially between the guide rails (26) and (26') between which it is tensioned. The ballast bar (24) exerts a vertical tension downwards while the rolling tube (21) holds it still. In this position, the projection surface (28) is totally exposed to receive a projected image. The sound source is behind the projection surface (28), which is acoustically transparent. When the rolling tube (21) is actuated, the fabric (22) rolls up around the tube (21) until the end-of-travel device of the axial motor of the rolling tube (21) interrupts the rolling, in a manner similar to the first embodiment. The end-of-travel device is adjusted so that the ballast bar (24) stops in the top position substantially at the height of the bottom edge of the deflection guide (32).

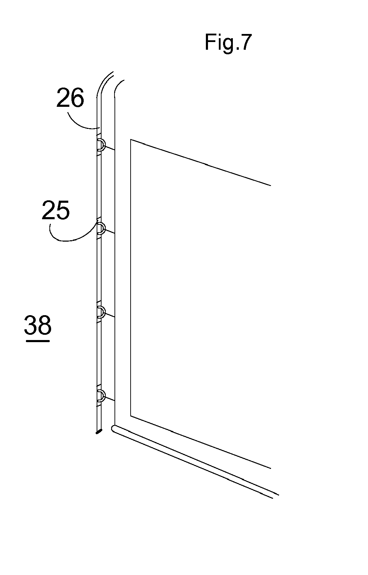

According to a variant embodiment shown in Fig. 7, the rails (26) and (26') consist of slots provided in the vertical walls (38) and (38'), these slots preferably being covered on their inner edges with a coating capable of promoting the sliding of the sliders (25).

The embodiments described are given as non-limiting examples of the invention which is defined by the following claims.

## Claims

1. A projection screen comprising: a rollable fabric (22) forming a projection surface (28); means for rolling the said fabric; ballasting means (24) to assist with the unrolling of the said fabric and to provide it by gravity with vertical tensioning: guidance means for guiding (25, 26) and for laterally tensioning (29) the said fabric, said guidance means being secured to fixed lateral walls being generally face to face and at right angles to the fabric; **characterized in that**, in use, only a portion of the fabric (22) rolls and unrolls, which portion remains hidden from view, and **in that** the projection surface (28) may be moved between a projection position, in which it is deployed in front of a wall (31), and a retracted position, in which it is hidden from view behind a wall (31, 39)

2. A projection screen according to claim 1, **characterized in that**, when it is unrolled, the fabric (22) unrolls in front of a wall (31) that is substantially vertical and parallel to the plain on which it unrolls.

3. A projection screen according to claim 2, **characterized in that** the fabric (22) is placed so as to extend in the unrolled position both in front of and behind the said wall (31), and to extend partially in the rolled-up position behind the said wall.

4. A projection screen according to claim 1, **characterized in that** the said means for guiding and for lateral tensioning the fabric consist of two pluralities of sliding fastening elements (25) each capable of moving along a determined path (26, 26'), the paths are placed symmetrically on two parallel planes generally secured to the said lateral walls being face to face and at right angles to the fabric (22) and having a contour in the shape of an inverted U bestriding the top edge of the said wall that is substantially vertical and parallel to the plane on which the fabric unrolls.

5. A projection screen according to any one of the preceding claims, **characterized in that** the said means for guiding and for laterally tensioning the fabric comprise elastic means (29) which connect the lateral edges of the fabric (22) to the said sliding fastening elements (25) and are placed on a portion of the fabric which extends in front of the said vertical wall (31) when the fabric is unrolled, the portion of the fabric extending behind the said vertical wall when the fabric is unrolled not being furnished with means for guiding and for laterally tensioning and being capable of being rolled around the said rolling means.

6. A projection screen according to either of claims 1 and 2, **characterized in that** the fabric is placed so as to extend in the unrolled position both in front of the said wall (31) and to extend partially in the rolled-up position above a substantially horizontal wall (39), the means for guiding and laterally tensioning the fabric consisting of two pluralities of sliding fastening elements (25) each capable of moving on a determined path (26, 26'), the paths placed symmetrically on two parallel planes generally secured to the said lateral walls being face to face and at right angles to the fabric (22) and having a contour comprising a portion that is substantially vertical and parallel to the plane on which the fabric unrolls and a horizontal portion that is above the said substantially horizontal wall (39).

7. A projection screen according to any one of the preceding claims, **characterized in that** at least the projection surface (28) of the said fabric (22) is permeable to sound waves.

8. A projection screen according to any one of the preceding claims, **characterized in that** at least one loudspeaker is placed between the said vertical wall (31) and the portion of the fabric (28) unrolling in front of the said wall.

9. A projection screen according to one of claims 1 to 7, **characterized in that** at least one loudspeaker is fitted into a recess provided in the said vertical wall (31).

10. A projection screen according to any one of the preceding claims, **characterized in that** the said guide rails (26, 26') provided for guiding and laterally tensioning the fabric consist of two slots arranged in two parallel walls placed symmetrically on either side of the fabric (22).
